# EUROPEAN PATENT APPLICATION

(11) **EP 1 845 454 A2**
(43) Date of publication of application: **17.10.2007**
(21) Application number: 07105963.8
(22) Date of filing: 11.04.2007
(51) Int. Cl.: G06F 12/08, G06F 17/30

(54) **Method for providing personalized information lifecycle management service using policy-based autonomic data management**

(30) Priority: 13.04.2006 KR 20060033727
(71) Applicant: ELECTRONICS AND TELECOMMUNICATIONS RESEARCH INSTITUTE, Daejeon 305-350 (KR)
(72) Inventor: Ahn, Chang-Won, Daejon 605-358 (KR); Park, Jong-Geun, Daejon 302-747 (KR); Kim, Kang-Ho, Daejon 605-729 (KR); Kim, June, Daejon 605-755 (KR); Kim, Seong-Woon, Daejon 605-503 (KR); Kim, Myung-Joon, Daejon 305-340 (KR)
(74) Representative: Betten & Resch

(57) **Abstract**

Provided is a method for providing personalized information lifecycle management service based on a personal data management policies. The method includes the steps of a) determining whether there is material change between a system for providing the information lifecycle management service and a first storage device connected to the system through a network; b) identifying the personal data management policies for the connected first storage device; c) identifying user's context information; d) performing data management based on the identified personal data management policies and context information; and e) updating the metadata with the execution result of data management.

## Description

### CROSS-REFERENCE S TO RELATED APPLICATIONS

The present invention claims priority of Korean Patent Application No. 10-2006-0033727, filed on April 13, 2006, which is incorporated herein by reference.

### BACKGROUND OF THE INVENTION

### Field of the Invention

The present invention relates to a method for providing personalized information lifecycle management service based on a personal data management policy; and, more particularly, to a method for providing personalized information lifecycle management service to effectively and conveniently manage a large quantity of data in a personal environment by managing, i.e., actively deploying and synchronizing, personal data in a plurality of storage devices connected to a network according to a pre-defined data management policies of a user.

### Description of Related Art

In the present invention, a wireless communication terminal means a terminal capable of wireless communication while an individual carries, such as a mobile communication terminal, Personal Communication Services (PCS), Personal Digital Assistant (PDA), Smart Phone, an International Mobile Communication-2000 (IMT-2000) terminal, and a Local Area Network (LAN) terminal.

According to the spread of various digital devices, the output of digital data increases at high-speed to the range that an individual or a small organization cannot manage. Therefore, the users increasingly require that the data should be safely stored and effectively managed.

Technologies and/or services are still scarce to support the consistent data management in a personal environment, which is different from an enterprise environment. And it is also scanty to effectively manage the personal data distributed in the various personal storage devices.

A conventional method simply provides a storage space through an Internet or provides a file sharing with the limited functionalities. However, there is a problem that the conventional method does not safely store the personalized digital data for a long time and does not provide an efficient data management service. In particular, an active data deployment for a plurality of information devices based on the preferences and context information of the user is not provided.

Recently, an information lifecycle management service was introduced as an effective data management mechanism.

The information lifecycle management service means a technology for classifying information into high value information and low value information and managing hierarchical storages according to their information lifecycle. For example, it means to store the high value information in high performance storage and store the low value information in low performance storage.

A conventional personal data managing technology will be described according to an example. KR Patent No. 10-0637927 (reference 1), registered on October 17, 2006, discloses "Data Synchronization Method between Terminals and Server". In synchronization of data between terminals and a server, a device information table, a mapping table, a change history table, an anchor table, and a personal information table are created, thereby making it easy to change each data item to be synchronized. Accordingly, based on the data synchronization method disclosed in the reference 1, data between a plurality of terminals and the synchronization server can be efficiently synchronized.

The device information table registers and manages a plurality of user terminals. The mapping table manages mapping information between actual data items to be synchronized between terminals and synchronization servers. The change history table manages change history required by a plurality of terminals used by the user and reflects only the changed final data. The anchor table manages a synchronization version reflected in the synchronization server and the terminal registered in the device information table. The personal information table manages personal information on the user registering at least one terminal as an object to be synchronized.

The conventional technology provides a method for manually synchronizing data between a plurality of terminals, but does not provide a method for managing data based on the context information and user's preferences without the user's intervention. That is, the conventional technology provides a method for simply synchronizing changed materials between a synchronization server and a plurality of terminals, but does not provide a method for automatically and efficiently managing data based on the personalized user data management policies beyond the function for simply synchronizing materials.

### SUMMARY OF THE INVENTION

An embodiment of the present invention is directed to providing a method for providing personalized information lifecycle management service to efficiently and conveniently manage a large quantity of data in a personal environment by managing, i.e., actively deploying and synchronizing, personal data in a plurality of storage devices connected to a network according to pre-defined data management policies of a user.

That is, the object of the present invention is to provide method for providing personalized information lifecycle management service to efficiently manage rapidly increasing digital data in a personal environment including small businesses and non-profit organizations by performing an active deploying function, a synchronizing function and general manage functions such as storing, recovering, sharing and changing of data on the personal data stored in a plurality of storage devices on network based on the data management policies of the user, e.g., stored data characteristics and user preference, and context information, e.g., input/output frequencies of the data and characteristics of storage devices.

Other objects and advantages of the present invention can be understood by the following description, and become apparent with reference to the embodiments of the present invention. Also, it is obvious to those skilled in the art to which the present invention pertains that the objects and advantages of the present invention can be realized by the means as claimed and combinations thereof.

In accordance with an aspect of the present invention, there is provided a method for providing a personalized information lifecycle management service based on a personal data management policies, including the steps of: a) determining whether there is material change between a system for providing the information lifecycle management service and a second storage device connected to the system through a network; b) identifying the personal data management policies for the connected second storage device; c) identifying user's context information; d) performing data management based on the identified personal data management policies and context information; and e) updating metadata with an execution result of the data management.

### BRIEF DESCRIPTION OF THE DRAWINGS

Fig. 1 shows a system for providing an information lifecycle management service in accordance with an embodiment of the present invention;

Fig. 2 is a flowchart describing a method for managing data when a new storage device is connected in accordance with an embodiment of the present invention;

Fig. 3 is a flowchart describing a method for managing data when a data management policy is changed in accordance with the embodiment of the present invention;

Fig. 4 is a flowchart describing the method for managing data when context information is changed in accordance with the embodiment of the present invention; and

Fig. 5 is a flowchart describing the method for managing data when a stored material is changed in accordance with the embodiment of the present invention.

### DESCRIPTION OF SPECIFIC EMBODIMENTS

Other objects and advantages of the present invention will become apparent from the following description of the embodiments with reference to the accompanying drawings. Therefore, those skilled in the field of this art of the present invention can embody the technological concept and scope of the invention easily. In addition, if it is considered that detailed description on a related art may obscure the points of the present invention, the detailed description will not be provided herein. The preferred embodiments of the present invention will be described in detail hereinafter with reference to the attached drawings.

The present invention can provide a technology for automatically managing personal data by efficiently managing rapidly increasing digital data in a personal environment including small businesses and non-profit organizations and automatically manage a large quantity of personal data stored in a plurality of storage devices connected to the system through a network based on the data management policies and context information pre-defined by the user.

The data management policy means a reference that characteristics of the data and user preference are considered. The context information means a reference that input/output (I/O) frequencies of the data, a user's schedule, and storage's characteristics are reflected.

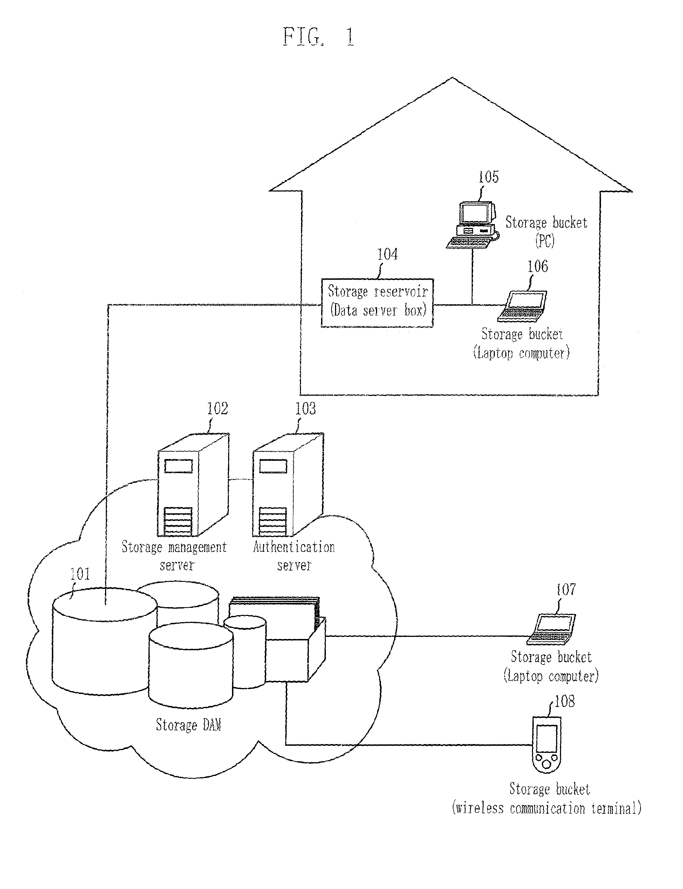

Fig. 1 shows a system for providing an information lifecycle management service in accordance with an embodiment of the present invention.

As shown in Fig. 1, the information lifecycle management service providing system according to the present invention includes a storage dam 101, a storage management server 102, and an authentication server 103. The storage dam 101 stores personal data according to each level of data layers. The storage management server 102 stores a personal data management policy and performs functions of storing, recovering, sharing, changing, synchronizing and actively deploying of the data between a plurality of storage devices of each user. The authentication server 103 identifies user and user's storage device and manages an access right to data and metadata. Herein, the storage management server 102 further stores metadata on user's data.

The information lifecycle management service providing system according to the present invention further includes a storage reservoir 104, which is respectively connected to a network and a storage bucket, and where data selected based on user's context information are actively deployed.

The storage reservoir 104 reduces network traffic by providing individual storage for the data selected based on the context information reflecting the input/output frequencies of the data, the user's schedule, and the characteristics of each storage device applied by the user.

That is, the storage reservoir 104 stores the data selected based on the context information among the stored data of the storage dam 101, e.g., frequently inputted/outputted data, and directly provides the data to user's storage buckets 105 to 108.

The storage buckets 105 and 106 of each user, which are final terminals, access to the storage reservoir 104 as the LAN environment according to a network access environment. The storage buckets 107 and 108 can directly access to the storage dam 101 as the WAN environment. The storage buckets 105 and 106 can grasp information on all data of the user based on the metadata of the storage management server 102 with no regard to the access environments.

The storage buckets 105 to 108 may be directly connected to a network through a wired/wireless network connection port such as Personal Computer, a laptop computer, and a wireless communication terminal or may be connected to the network through other devices, which are already connected to the network such as Portable Multimedia Player (PMP), an MP3 player, and a portable storage device.

When the storage bucket without the wired/wireless network connection port is connected, the final terminal, e.g., the portable storage device, is recognized as a local storage in the directly connected device, e.g., Personal Computer. However, the final terminal is recognized as an independent final terminal for managing data in the information lifecycle management service providing system according to the present invention. The information lifecycle management service providing system performs diverse data management, i.e., storing, recovering, sharing, changing, synchronizing and active deploying of the data, based on the pre-registered data management policies.

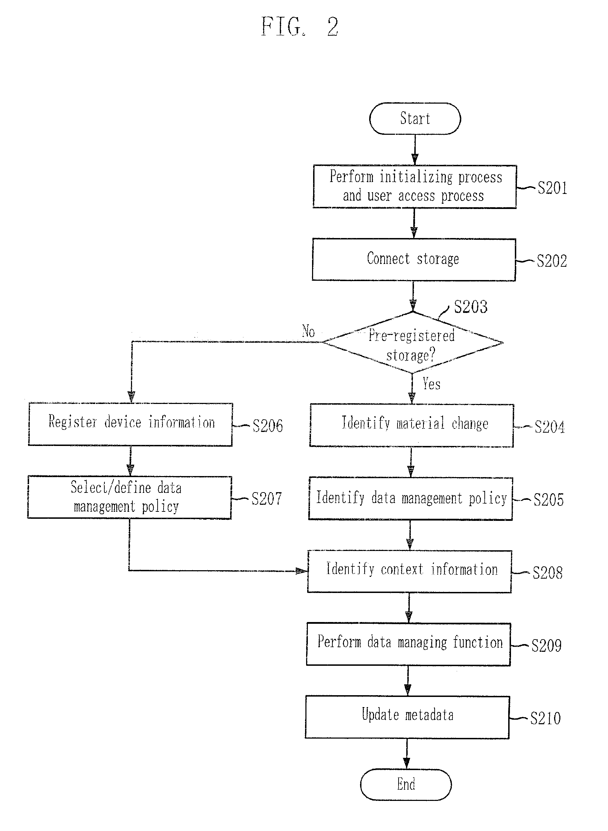

Fig. 2 is a flowchart describing a method for managing data when a new storage device is connected in accordance with an embodiment of the present invention.

The information lifecycle management service providing system performs a series of procedures such as the initializing process and the user access process at step S201.

When the storage device is connected by the user at step S202, it is identified whether the connected storage device is pre-registered at step S203. Herein, the storage device means the storage buckets 105 to 108 directly/indirectly connected to the storage dam 101 through the wired/wireless network connection port.

When it turns out at step S203 that the storage device is pre-registered in the information lifecycle management service providing system, it is identified whether the material between the storage device and the information lifecycle management service providing system is changed. Also, the changed material is identified at step S204. The personal data management policies on the storage are identified at step S205 and the user's context information is identified at step S208. The data managing function, e.g., the function for actively deploying data, is performed at step S209 and metadata are updated at step S210. The user's context information is checked when it is permitted to access to the user.

When it turns out at step S203 that the storage device is not pre-registered in the information lifecycle management service providing system, the device information of the storage is newly registered at step S206. The related data management policies are selected from a set of typical policies or newly defined at step S207. That is, the data management policies related to the storage device are set up. Subsequently, the logic flow goes to the step S208 of identifying user's context information.

The information lifecycle management service providing system performs functions of storing, recovering, sharing, changing, synchronizing and actively deploying of the data based on the personal data management policies of the object storage and user's collected context information. The result is reflected on the metadata.

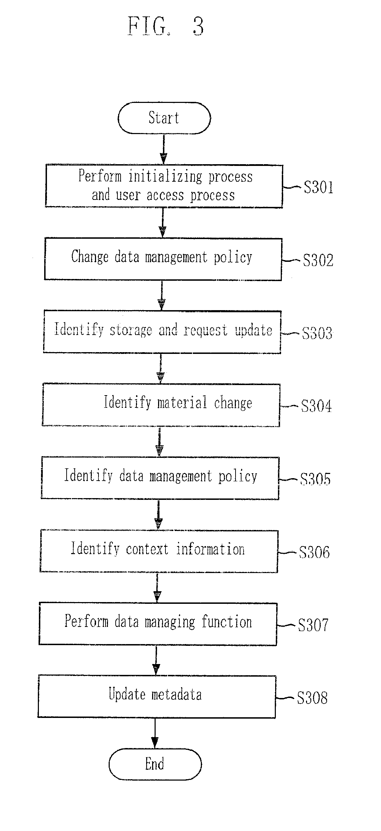

Fig. 3 is a flowchart describing a method for managing data when the data management policy is changed in accordance with the embodiment of the present invention.

A procedure that the information lifecycle management service providing system recognizes the change and actively deploys the data when user's personal data management policies reflecting characteristics and user preference are changed will be described in detail.

The information lifecycle management service providing system performs a series of procedures such as an initializing process and a user access process at step S301.

When user's data management policy is changed at step S302, the connected storage device is identified and the update of the storage device is automatically or manually requested at step S303.

The information lifecycle management service providing system identifies material change with the storage device at step S304, identifies the personal data management policies on the storage device at step S305, and identifies user's context information at step S306.

The data management such as storing, recovering, sharing, changing, synchronizing and actively deploying of the data is performed based on the personal data management policies of the identified object storage and the collected user's context information at step S307 and the performance result is reflected on the metadata at step S308.

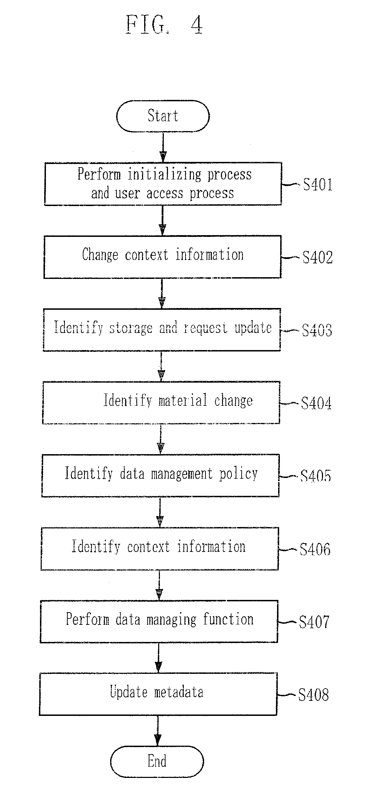

Fig. 4 is a flowchart describing the method for managing data when the context information is changed in accordance with the embodiment of the present invention.

Fig. 4 shows a procedure that the information lifecycle management service providing system according to the present invention recognizes the change when user's context information is changed and performs an active deployment based on the personal data management policies.

The information lifecycle management service providing system performs a series of procedures such as an initializing process and a user access process at step S401.

When user's context information is changed at step S402, the connected storage device is identified and the update of the storage device is automatically or manually requested at step S403.

The information lifecycle management service providing system identifies material change with the storage device at step S404, identifies the personal data management policies on the storage device at step S405, and identifies user's context information at step S406.

The data management such as storing, recovering, sharing, changing, synchronizing and actively deploying of the data is performed based on the personal data management policies of the identified object storage and the collected user's context information at step S407 and the performance result is reflected on the metadata at step S408.

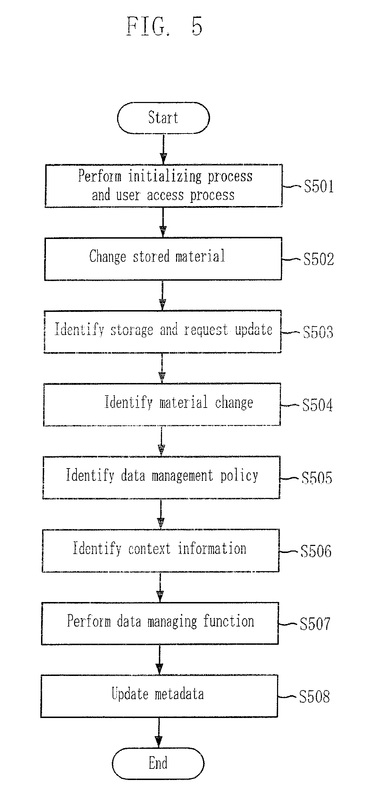

Fig. 5 is a flowchart describing the method for managing data when the stored material is changed in accordance with the embodiment of the present invention.

The information lifecycle management service providing system performs a series of procedures such as an initializing process and a user access process at step S501.

When the stored material of the storage device is changed at step S502, the connected storage device is identified and the update of the storage device is automatically or manually requested at step S503.

The information lifecycle management service providing system identifies material change with the storage device at step S504, identifies the personal data management policies on the storage device at step S505, and identifies user's context information at step S506.

The data management such as storing, recovering, sharing, changing, synchronizing and actively deploying of the data is performed based on the personal data management policies of the identified object storage device and the collected user's context information at step S507 and the performance result is reflected on the metadata at step S508.

The present invention can provide a convenient data managing service based on the personalized policies by performing diverse data management, e.g., storing, recovering, sharing, changing, synchronizing and actively deploying of the data, without interruption of the manager based on the data management policies that the user pre-defines personal data of various storage devices such as Personal Computer and a portable storage device, which are connected to the system through a network in a personal environment.

As described above, the technology of the present invention can be realized as a program and stored in a computer-readable recording medium, such as CD-ROM, RAM, ROM, floppy disk, hard disk and magneto-optical disk. Since the process can be easily implemented by those skilled in the art of the present invention, further description will not be provided herein.

While the present invention has been described with respect to the specific embodiments, it will be apparent to those skilled in the art that various changes and modifications may be made without departing from the spirit and scope of the invention as defined in the following claims.

## Claims

1. A method for providing a personalized information lifecycle management service based on a personal data management policies, comprising the steps of:
a) determining whether there is material change between a system for providing the information lifecycle management service and a first storage device connected to the system through a network;
b) identifying the personal data management policies for the connected second storage device;
c) identifying user's context information;
d) performing data management based on the identified personal data management policies and context information; and
e) updating metadata with an execution result of the data management.

2. The method of claim 1, further comprising the steps of:
f) connecting a second storage device to the system through a network; and
g) determining whether or not the connected second storage device is a pre-registered device.

3. The method of claim 2, further comprising the step of:
h) when the second storage device is not a pre-registered device, newly registering the second storage device and setting up a corresponding data management policies.

4. The method of claim 3, wherein in the step h), the data management policies are selected from a set of typical policies to set up the data management policies.

5. The method of claim 3, wherein in the step h), a data management policy is defined.

6. The method of claim 1, further comprising the step of:
i) when the data management policies are changed, requesting the first storage device to be updated to identify the connected first storage device and identify the material change.

7. The method of claim 6, wherein in the step i), the first storage device is requested to be updated through a method between a manual method and an automatic method.

8. The method of one of claims 1 to 7, further comprising the step of:
j) when the context information is changed, requesting the first storage device to be updated to identify the first storage device and identify the material change.

9. The method of one of claims 1 to 8, further comprising the step of:
k) when the stored material of the first storage device is changed, requesting the first storage device to be updated to identify the first storage device and identify the material change.

10. The method of one of claims 1 to 9, wherein in the step d), at least one function among functions of storing, recovering, sharing, changing, actively deploying of the data, and synchronizing of the data between the system and the storage device is performed.

11. The method of claim 10, wherein in the step d), the active deploying function of individually storing the selected data is performed based on the context information in a storage reservoir between the system and the storage buckets to reduce network traffic.

12. The method of claim 10 or 11, wherein the data management policies are set up based on characteristics of the stored data and user preferences.

13. The method of one of claims 10 to 12, wherein the context information is set up based on input/output frequencies of data, user's schedule, and characteristics of storage devices.

14. The method of one of claims 10 to 13, wherein the storage device is directly connected to the system through a wired/wireless network port.

15. The method of one of claims 10 to 14, wherein the storage device is indirectly connected to the system through other device which is already connected to the wired/wireless network.
